# EUROPÄISCHE PATENTANMELDUNG

(11) **EP 2 947 601 A1**
(43) Veröffentlichungstag der Anmeldung: **25.11.2015**
(21) Anmeldenummer: 15161854.3
(22) Anmeldetag: 31.03.2015
(51) Int. Cl.: G06K 9/00

(54) **VERFAHREN UND VORRICHTUNG ZUM ERMITTELN EINER FAHRZEUGPOSITION EINES FAHRZEUGES GEGENÜBER EINER REFERENZPOSITION**

(30) Priorität: 21.05.2014 DE 102014209678
(71) Anmelder: ROBERT BOSCH GMBH, 70442 Stuttgart (DE)
(72) Erfinder: Mathony, Hans-Joerg, 71732 Tamm-Hohenstange (DE); Schoenherr, Michael, 71272 Renningen-Malmsheim (DE); Schneider, Marcus, 71642 Ludwigsburg (DE); Heckel, Joerg, 71277 Rutesheim (DE); Freess, Jascha, 71229 Leonberg (DE); Irion, Albrecht, 70563 Stuttgart (DE)

(57) **Zusammenfassung**

Die vorliegende Erfindung betrifft ein Verfahren zum Ermitteln einer Fahrzeugposition (2) eines Fahrzeuges (1) gegenüber einer Referenzposition (3). Dieses Verfahren umfasst ein Erfassen (S1) eines Referenzbildes (10) mittels einer an dem Fahrzeug (1) angeordneten Kamera (4), welche zumindest einen Teils eines Umfeldes des Fahrzeuges abbildet, wobei sich das Fahrzeug (1) in der Referenzposition (3) befindet, ein Erfassen (S2) eines Vergleichsbildes (11) mittels der an dem Fahrzeug (1) angeordneten Kamera (4), ein Vergleichen (S3) des Referenzbildes (10) mit dem Vergleichsbild (11), wobei eine Lageänderung und/oder eine Größenänderung von zumindest einem Merkmal in dem Vergleichsbild (11) gegenüber dem Referenzbild (10) ermittelt wird, und ein Ermitteln (S4) einer Fahrzeugposition (2) des Fahrzeuges (1) gegenüber der Referenzposition (3) basierend auf der Lageänderung und/oder der Größenänderung. Ferner wird eine entsprechende Vorrichtung zum Ermitteln einer Fahrzeugposition (2) eines Fahrzeuges (1) gegenüber einer Referenzposition (3) offenbart.

## Beschreibung

### Stand der Technik

Die vorliegende Erfindung betrifft ein Verfahren und eine Vorrichtung zum Ermitteln einer Fahrzeugposition eines Fahrzeuges gegenüber einer Referenzposition.

Halbautomatische Einparksysteme sind bereits seit einigen Jahren in der Serienproduktion. Bei solchen Systemen fährt der Fahrer mit einem Fahrzeug an Parklücken entlang. Das Fahrzeug erkennt die Parklücken mittels seitlich verbauter Ultraschallsensoren. Legt der Fahrer den Rückwärtsgang ein, so übernimmt das Einparksystem die Kontrolle über das Lenkrad und steuert das Fahrzeug in die Parklücke. Der Fahrer muss allerdings selber Gas geben und die Bremse betätigen. Als weitere Ausbaustufe sind Einparksysteme bekannt, bei denen der Fahrer nicht Gas geben oder bremsen muss. Dies übernimmt ebenfalls das Einparksystem, beispielsweise durch einen direkten Zugriff auf die Längsführungsaktuatorik des Fahrzeuges, zu der z.B. Bremse und Motorsteuerung gehören.

In der Entwicklung befinden sich auch bereits Einparksysteme, welchen lediglich eingelernt wird, wo sich ein bestimmter Parkplatz befindet. Der bestimmte Parkplatz ist beispielsweise eine heimische Garage. Im Anschluss an den Einlernvorgang braucht der Fahrer das Fahrzeug nur noch in die Nähe der zuvor eingelernten Parkposition bzw. Zielposition zu stellen. Das Fahrzeug soll die aktuelle Position relativ zur Zielposition selbständig erkennen und sich automatisch von der aktuellen Position bis zu der eingelernten Parkposition bzw. Zielposition bewegen. Wichtig ist dabei die Nutzung der Umfeldsensorik des Fahrzeuges, da der besondere Vorteil des Systems ist, dass der Fahrer sich nicht um eine Ungenauigkeit seiner Anhalteposition vor Beginn des automatischen Einparkens kümmern muss. Ein solches automatisches Einparken wird auch als Homezone-Parken oder Garagenparken bezeichnet.

Das Homezone-Parken umfasst zwei Phasen:
In einer ersten Phase erfolgt ein Trainieren des Systems. Die gewünschte Bahn von einer Startposition zu einer Zielposition wird durch den Fahrer definiert, indem der Fahrer die Bahn mit dem Fahrzeug abfährt und dabei das System die Bahn und die Objekte im Fahrzeugumfeld anhand einer geeigneten Umfeldsensorik speichert.

In einer zweiten Phase erfolgt eine Anwendung des Systems. Der Fahrer fährt das Fahrzeug in die Nähe der "trainierten" bzw. gespeicherten Startposition mit einer ähnlichen Orientierung. Der Fahrer aktiviert das System. Das System lokalisiert sich selbst und ermittelt dabei einen Versatz des Fahrzeuges hinsichtlich Position und Orientierung gegenüber der gespeicherten Startposition. Dann übernimmt das System die automatische Führung des Fahrzeuges von der aktuellen Position zur vordefinierten Zielposition. Auch während der Führung muss ein Abgleich im System stattfinden um eine aktuelle Position gegenüber der gespeicherten Bahn zu bestimmen.

Eine qualitativ geeignete Lokalisierung der Fahrzeugposition mittels einer Umfeldsensorik (Kameras, Ultraschallsensoren, Laserscanner, etc.) ist hierbei die entscheidende Herausforderung. Bisher sind hierfür Sensorsysteme vorgesehen die eine Reichweite von über 20m und eine sehr gute Winkel- und Entfernungsauflösung aufweisen, um ein Erfassen von umgebenden Objekten zu ermöglichen. Solche Sensorsysteme sind jedoch technisch aufwendig und somit teuer.

### Offenbarung der Erfindung

Die erfindungsgemäße Verfahren zum Ermitteln einer Fahrzeugposition eines Fahrzeuges gegenüber einer Referenzposition umfasst ein Erfassen eines Referenzbildes mittels einer an dem Fahrzeug angeordneten Kamera, welche zumindest einen Teils eines Umfeldes des Fahrzeuges abbildet, wobei sich das Fahrzeug in der Referenzposition befindet, ein Erfassen eines Vergleichsbildes mittels der an dem Fahrzeug angeordneten Kamera, ein Vergleichen des Referenzbildes mit dem Vergleichsbild, wobei eine Lageänderung und/oder eine Größenänderung von zumindest einem Merkmal in dem Vergleichsbild gegenüber dem Referenzbild ermittelt wird, und ein Ermitteln einer Fahrzeugposition des Fahrzeuges gegenüber der Referenzposition basierend auf der Lageänderung und/oder der Größenänderung.

Die erfindungsgemäße Vorrichtung zum Ermitteln einer Fahrzeugposition eines Fahrzeuges gegenüber einer Referenzposition umfasst eine an dem Fahrzeug angeordneten Kamera, die dazu eingerichtet ist ein Referenzbild zu Erfassen, welche zumindest einen Teil eines Umfeldes des Fahrzeuges abbildet, wenn das Fahrzeug in der Referenzposition befindlich ist, und ein Vergleichsbild zu erfassen. Ferner umfasst die erfindungsgemäße Vorrichtung eine Auswertungseinheit, die dazu eingerichtet ist das Referenzbild mit dem Vergleichsbild zu vergleichen, wobei eine Lageänderung und/oder eine Größenänderung von zumindest einem Merkmal in dem Vergleichsbild gegenüber dem Referenzbild ermittelt wird, und eine Fahrzeugposition des Fahrzeuges gegenüber der Referenzposition basierend auf der Lageänderung und/oder der Größenänderung zu ermitteln.

Insbesondere wird dabei das Merkmal, dessen Lageänderung und/oder Größenänderung in dem Vergleichsbild gegenüber dem Referenzbild ermittelt wird, entweder zuerst aus dem Referenzbild extrahiert und dann in dem Vergleichsbild gesucht oder aber zuerst aus dem Vergleichsbild extrahiert und dann in dem Referenzbild gesucht. Ein erfindungsgemäßes Verfahren und eine erfindungsgemäße Vorrichtung sind vorteilhaft, da in diesen keine hochgenaue Umfeldsensorik benötigt wird, sondern günstige Monokameras verwendet werden können, um eine Fahrzeugposition zu ermitteln. Reale und schwer zu erfassende Entfernungsinformationen werden nicht benötigt. Zudem sind viele aktuelle Fahrzeuge bereits mit einer an dem Fahrzeug angeordneten Kamera ausgestattet, so dass auf bereits vorhandene Hardware, wie z.B. eine Rückfahrkamera, zurückgegriffen werden kann. Dabei sind die Anforderungen an die Kamera deutlich geringer als bei Kameras, die mit Hilfe des StructureForMotion-Verfahrens Entfernungen zu Objekten detektieren.

Mit Hilfe einer Monokamera welche an einer beliebigen Position an oder in dem Fahrzeug positioniert ist (vorne, hinten, seitlich) kann somit eine örtliche Lokalisierung durchgeführt werden, die unabhängig von der gewünschten Fahrtrichtung des Fahrzeuges ist, und auch ohne die exakte Distanz zu Objekten im Umfeld des Fahrzeuges zu bestimmen. Somit kann beispielsweise eine Rückfahrkamera verwendet werden, um bei einem Homezone-Parken die Position des Fahrzeuges zu ermitteln. Dies kann auch während einer Fahrt des Fahrzeuges erfolgen.

Die Unteransprüche zeigen bevorzugte Weiterbildungen der Erfindung.

Es ist vorteilhaft, wenn die Lageänderung eine Änderung der Lage eines Merkmales in horizontaler Richtung ist. Damit kann sowohl ein bezüglich der Aufnahmerichtung der Kamera seitlicher Versatz des Fahrzeuges gegenüber der Referenzposition als auch eine Drehung des Fahrzeuges gegenüber der Referenzposition auf einfache Weise ermittelt werden.

Ebenso ist es vorteilhaft, wenn die Lageänderung eine Änderung der Lage eines Merkmales in vertikaler Richtung ist. Damit kann Versatz des Fahrzeuges gegenüber der Referenzposition in Aufnahmerichtung der Kamera auf einfache Weise ermittelt werden.

Des Weiteren ist es vorteilhaft, wenn das Erfassen des Referenzbildes und des Vergleichsbildes durch ein mobiles Gerät, insbesondere ein Smartphone, erfolgt, welches derart in dem Fahrzeug angeordnet ist, dass die Kamera zumindest einen Teils eines Umfeldes des Fahrzeuges abbildet. Somit wird ein Ermitteln der Fahrzeugposition eines Fahrzeuges auch für solche Fahrzeuge ermöglicht, die nicht über eine fest eingebaute Kamera verfügen, wodurch eine Fahrzeugfunktionalität über das mobile Gerät erweitert wird.

Insbesondere ist das mobile Gerät in einer dafür vorgesehenen Halterung angeordnet. Somit kann das mobile Gerät nach einer Entnahme wieder an einer Position in dem Fahrzeug angeordnet werden, die in etwa der Position vor der Entnahme entspricht. Die ermittelte Fahrzeugposition wird nicht durch eine Positionsänderung der Kamera an dem Fahrzeug verfälscht, insbesondere, wenn die erfassten Bilder Teile des Fahrzeuges umfassen. Dabei ist eine Nutzung handelsüblicher Smartphone- oder PDA-Halterungen möglich, wodurch auf kostengünstige Elemente zurückgegriffen werden kann, die oftmals bereits verfügbar sind.

Es ist von Vorteil, wenn eine Kalibrierung bezüglich der vertikalen und horizontalen Orientierung der Kamera erfolgt. Dadurch kann eine Lageänderung der Kamera bezüglich ihrer vertikalen und horizontalen Orientierung ausgeglichen werden, was insbesondere dann vorteilhaft ist, wenn die Kamera von einem mobilen Gerät umfasst wird, da hier oftmals eine Neupositionierung der Kamera erfolgt, die eine Lageänderung der Kamera mit sich bringen kann. Es ist somit keine fest justierte Halterung notwendig.

Ebenso ist es vorteilhaft, wenn das Vergleichen des Referenzbildes mit dem Vergleichsbild basierend auf ausgewählten repräsentativen Merkmalen in dem Vergleichsbild und dem Referenzbild erfolgt. Dabei kann vor dem Vergleichen insbesondere eine Filterung des Referenzbildes und/oder des Vergleichsbildes erfolgen, um die repräsentativen Merkmale zu ermitteln. Dies ist vorteilhaft, da somit nicht die gesamten Bilder verglichen werden müssen. Der Speicherbedarf und die benötigte Rechenleistung werden verringert. Der Einsatz von kostengünstiger Hardware wird ermöglicht.

Insbesondere ist es vorteilhaft, wenn die repräsentativen Merkmale Kanten und/oder Flächen sind. Diese können durch eine Filterung bei geringem Rechenaufwand ermittelt werden und unter geringem Speicherbedarf gespeichert werden.

Ferner ist ein Fahrzeug mit einer erfindungsgemäßen Vorrichtung zum Ermitteln einer Fahrzeugposition eines Fahrzeuges gegenüber einer Referenzposition vorteilhaft, da dieses alle Vorteile der zuvor beschriebenen Vorrichtung aufweist. Insbesondere wird die erfindungsgemäßen Vorrichtung dabei von einem Einparksystem umfasst.

### Kurze Beschreibung der Zeichnungen

Nachfolgend werden Ausführungsbeispiele der Erfindung unter Bezugnahme auf die begleitende Zeichnung im Detail beschrieben. Gleiche, bzw. funktional gleiche Teile sind dabei mit den gleichen Bezugszeichen bezeichnet. In der Zeichnung ist:
- Figur 1: ein Fahrzeug mit einer erfindungsgemäßen Vorrichtung zum Ermitteln einer Fahrzeugposition des Fahrzeuges gegenüber einer Referenzposition in einer ersten beispielhaften Ausführungsform,
- Figur 2: ein beispielhaftes Ablaufdiagram eines erfindungsgemäßen Verfahrens zum Ermitteln einer Fahrzeugposition des Fahrzeuges gegenüber einer Referenzposition,
- Figur 3: ein beispielhaftes Referenzbild, welches von der erfindungsgemäßen Vorrichtung in der ersten Ausführungsform erfasst wurde und ein zugehöriges beispielhaftes Vergleichsbild, das nach einem Versatz des Fahrzeuges gegenüber der Referenzposition entlang seiner Querachse erfasst wurde,
- Figur 4: ein beispielhaftes Referenzbild, welches von der erfindungsgemäßen Vorrichtung in der ersten Ausführungsform erfasst wurde und ein zugehöriges beispielhaftes Vergleichsbild, das nach einem Versatz des Fahrzeuges gegenüber der Referenzposition entlang seiner Längsachse erfasst wurde,
- Figur 5: ein beispielhaftes Referenzbild, welches von der erfindungsgemäßen Vorrichtung in der ersten Ausführungsform erfasst wurde und ein zugehöriges beispielhaftes Vergleichsbild, das nach einem Drehung des Fahrzeuges gegenüber der Referenzposition entlang seiner Hochachse erfasst wurde, und
- Figur 6: ein an dem Fahrzeug angeordnetes mobiles Gerät, welches die Kamera der erfindungsgemäßen Vorrichtung in einer zweiten Ausführungsform der Erfindung umfasst.

### Ausführungsformen der Erfindung

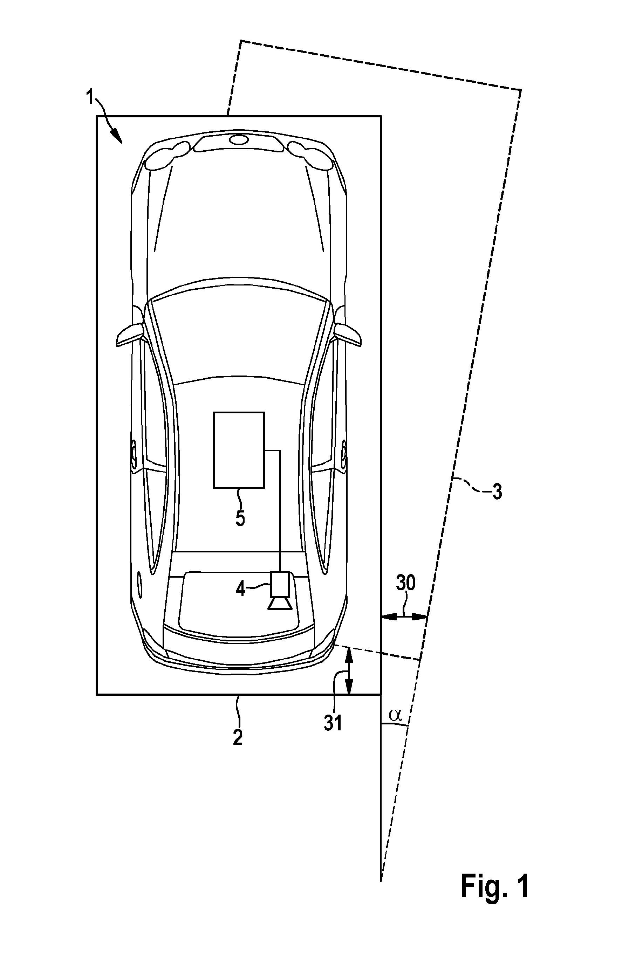

Figur 1 zeigt ein Fahrzeug 1 mit einer erfindungsgemäßen Vorrichtung zum Ermitteln einer Fahrzeugposition 2 des Fahrzeuges 1 gegenüber einer Referenzposition 3 in einer ersten beispielhaften Ausführungsform. Die Vorrichtung umfasst eine an dem Fahrzeug 1 angeordneten Kamera 4. Die Kamera 4 kann an einer beliebigen Stelle des Fahrzeuges 1 angeordnet sein und mit einer beliebigen Ausrichtung auf das Umfeld des Fahrzeuges 1 gerichtet sein. In dieser Ausführungsform ist die Kamera 4 eine Rückfahrkamera am Heck des Fahrzeuges 1 und ist entlang einer Längsachse des Fahrzeuges 1 gegenüber dem Fahrzeug 1 nach hinten gerichtet. Ferner umfasst die Vorrichtung eine Auswertungseinheit 5. Die Auswertungseinheit 5 ist eine digitale Recheneinheit, die eine Software ausführt, welche den Ablauf des im Folgenden beschriebenen erfindungsgemäßen Verfahrens steuert. Dazu ist die Auswertungseinheit 5 in dieser ersten Ausführungsform über eine Videoleitung 6 mit der Kamera 4 verbunden.

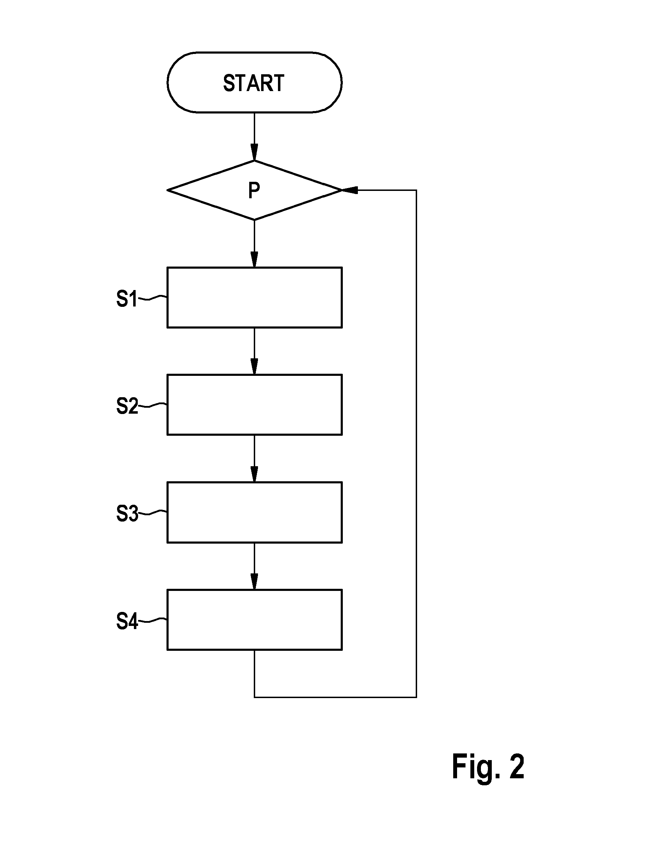

Figur 2 zeigt ein beispielhaftes Ablaufdiagram für das erfindungsgemäße Verfahren in dieser ersten beispielhaften Ausführungsform. Das Verfahren wird in dieser Ausführungsform durch einen Anwender gestartet. Dies erfolgt insbesondere dann, wenn der Anwender beabsichtigt, eine Referenzposition 3 zu speichern, in deren Umgebung das Fahrzeug 1 typischerweise abgestellt wird. Diese Referenzposition ist beispielsweise eine Position vor einer Garage, die besonders günstig für den Fahrer ist, um das Fahrzeug 1 zu verlassen. Das Fahrzeug 1 ist dazu eingerichtet, sich basierend auf der erfindungsgemäß ermittelten Fahrzeugposition 2 automatisch zu einer vorgegeben Zielposition zu bewegen, deren Lage gegenüber der Referenzposition 3 bekannt ist. Die Zielposition ist beispielsweise eine Parkposition des Fahrzeuges 1 in der Garage.

Nach dem Starten des Verfahrens wird ein erster Verfahrensschritt S1 ausgeführt. In dem ersten Verfahrensschritt S1 erfolgt ein Erfassen eines Referenzbildes 10 mittels der an dem Fahrzeug 1 angeordneten Kamera 4, welche zumindest einen Teils eines Umfeldes des Fahrzeuges 1 abbildet, wobei sich das Fahrzeug 1 in der Referenzposition 3 befindet. Das Referenzbild 10 wird an die Auswertungseinheit 5 übertragen und für einen späteren Zugriff gespeichert. In diesem ersten Verfahrensschritt S1 wird somit die Referenzposition 3 definiert.

Nach dem Ausführen des ersten Verfahrensschrittes S1 wird das Verfahren in dieser Ausführungsform zunächst in einer Warteschleife P pausiert und wird erst weitergeführt, wenn eine Anforderung zum Ermitteln einer Fahrzeugposition 2 vorliegt. Eine solche Anforderung könnte beispielsweise erfolgen, wenn der Anwender einen automatischen Einparkvorgang anfordert, nachdem er das Fahrzeug 1 im Bereich der Referenzposition 3 abgestellt hat. Optional werden während dieser Pause weitere Verfahrensschritte durchgeführt. Beispielsweise wird mit dem Fahrzeug 1 eine Strecke zwischen der Referenzposition 3 und der Zielposition abgefahren und damit deren Lage gegenüber der Referenzposition 3 für eine spätere Durchführung einer automatischen Bewegung des Fahrzeuges 1 von der Referenzposition 3 zu dieser Zielposition gespeichert.

Liegt eine solche Anforderung zur Durchführung eines automatischen Einparkvorgangs vor, so wird ein zweiter Verfahrensschritt S2 ausgeführt. In dem zweiten Verfahrensschritt S2 erfolgt ein Erfassen eines Vergleichsbildes 11 mittels der an dem Fahrzeug 1 angeordneten Kamera 4. Da das Verfahren nach dem ersten Verfahrensschritt S1 pausiert wurde, ist es möglich und auch zu erwarten, dass das Fahrzeug 1 aus der Referenzposition 3 heraus und wieder in deren Bereich hinein bewegt wurde und das von der Kamera 4 erfasste Vergleichsbild 11 nicht exakt dem Referenzbild 10 entspricht, sondern entsprechend eines Versatzes des Fahrzeuges 1 von der Referenzposition und somit entsprechend eines Versatzes der Kamera 4 von diesem abweicht. Das Vergleichsbild 11 wird ebenfalls gespeichert.

Nach dem Ausführen des zweiten Verfahrensschrittes S2 wird ein dritter Verfahrensschritt S3 ausgeführt. In dem dritten Verfahrensschritt S3 erfolgt ein Vergleichen des Referenzbildes 10 mit dem Vergleichsbild 11, wobei eine Lageänderung und eine Größenänderung von zumindest einem Merkmal in dem Vergleichsbild 11 gegenüber dem Referenzbild 10 ermittelt wird. Ein Merkmal ist dabei beispielsweise ein in dem Referenzbild 10 abgebildetes Objekt. Dieses Objekt wird mittels einer Software in dem Vergleichsbild 11 gesucht. Wurde ein Merkmal aus dem Referenzbild 10 in dem Vergleichsbild 11 gefunden, so wird eine Lageänderung und eine Größenänderung des Merkmales bestimmt. Um die Lageänderung des Merkmals zu bestimmen, werden das Referenzbild 10 und das Vergleichsbild 11 übereinander gelegt. Eine Strecke zwischen den Positionen eines Merkmales in dem Referenzbild 10 und in dem Vergleichsbild 11 beschreibt die Lageänderung. Um die Größenänderung zu bestimmen, wird die Größe des Merkmales in dem Referenzbild 10 bestimmt und die Größe des Merkmales in dem Vergleichsbild 11 bestimmt. Eine Differenz zwischen diesen Größen beschreibt die Größenänderung.

Nach dem Ausführen des dritten Verfahrensschrittes S3 wird ein vierter Verfahrensschritt S4 ausgeführt. In dem vierten Verfahrensschritt S4 erfolgt ein Ermitteln einer Fahrzeugposition 2 des Fahrzeuges 1 gegenüber der Referenzposition 3 basierend auf der Lageänderung und der Größenänderung. Dabei wird in dieser Ausführungsform ein erster Versatz 30 zwischen der Fahrzeugposition 2 und der Referenzposition 3 in Richtung der Querachse des Fahrzeuges 1 ermittelt, ein zweiter Versatz 31 zwischen der Fahrzeugposition 2 und der Referenzposition 3 in Richtung der Längsachse des Fahrzeuges 1 ermittelt und ein Drehwinkel α der Fahrzeugposition 2 gegenüber der Referenzposition 3 ermittelt. Dabei bezieht sich ein Versatz zwischen der Fahrzeugposition 2 und der Referenzposition 3 auf die Stelle des Fahrzeuges an der die Kamera angeordnet ist.

Der erste Versatz 30 wird in dieser Ausführungsform ermittelt, wenn eine Lageänderung der Merkmale in horizontaler Richtung vorliegt, die Größe der Merkmale gleich bleibt, also keine Größenänderung vorliegt, und Merkmale in einem Nahbereich der Kamera 4 eine größere Lageänderung erfahren als Merkmale, die weiter von der Kamera 4 entfernt sind.

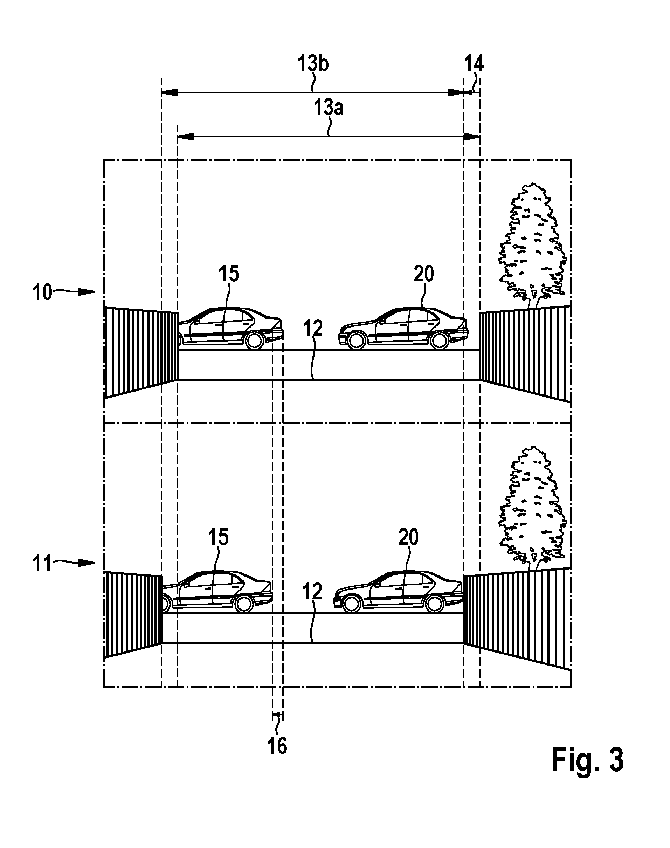

Figur 3 zeigt dazu ein beispielhaftes Referenzbild 10 (oben), und ein zugehöriges beispielhaftes Vergleichsbild 11 (unten), das nach einem Versatz des Fahrzeuges 1 gegenüber der Referenzposition 3 entlang seiner Querachse erfasst wurde. Als ein beispielhaftes Merkmal ist eine Einfahrt 12 gewählt, die mit einer ersten Breite 13a in dem Referenzbild 10 und einer zweiten Breite 13b in dem Vergleichsbild 11 abgebildet ist. Die Einfahrt 12 ist in dem Vergleichsbild 11 gegenüber dem Referenzbild 10 um eine erste Strecke 14 horizontal nach links verschoben. Somit liegt eine Lageänderung des Merkmals in horizontaler Richtung vor. Die Größe der Einfahrt 12 ist hier durch die erste und zweite Breite 13a, 13b repräsentiert, welche jeweils die Breite der Einfahrt 12 in dem Referenzbild 10 und dem Vergleichsbild 11 beschreiben. Die erste Breite 13a ist in diesem Beispiel gleich der zweiten Breite 13b. Es liegt somit keine Größenänderung bezüglich der Einfahrt 12 vor. Als ein weiteres beispielhaftes Merkmal ist ein parkendes Fahrzeug 15 gewählt, welches weiter von der Kamera 4 entfernt ist als die Einfahrt 12. Das parkende Fahrzeug 15 ist in dem Vergleichsbild 11 gegenüber dem Referenzbild 10 um eine zweite Strecke 16 horizontal nach links verschoben. Die erst Strecke 14 ist größer als die zweite Strecke 16. Somit wird in dem in Figur 3 gezeigten Falle ein erster Versatz 30 ermittelt. Eine Verschiebung der Merkmale nach links deutet dabei in der gezeigten Ausführungsform einen ersten Versatz 30 des Fahrzeuges 1 gegenüber der Blickrichtung der Kamera 4 nach rechts an.

Der zweite Versatz 31 wird in dieser Ausführungsform ermittelt, wenn eine Größenänderung der Merkmale und eine Lageänderung der Merkmale in vertikaler Richtung vorliegen.

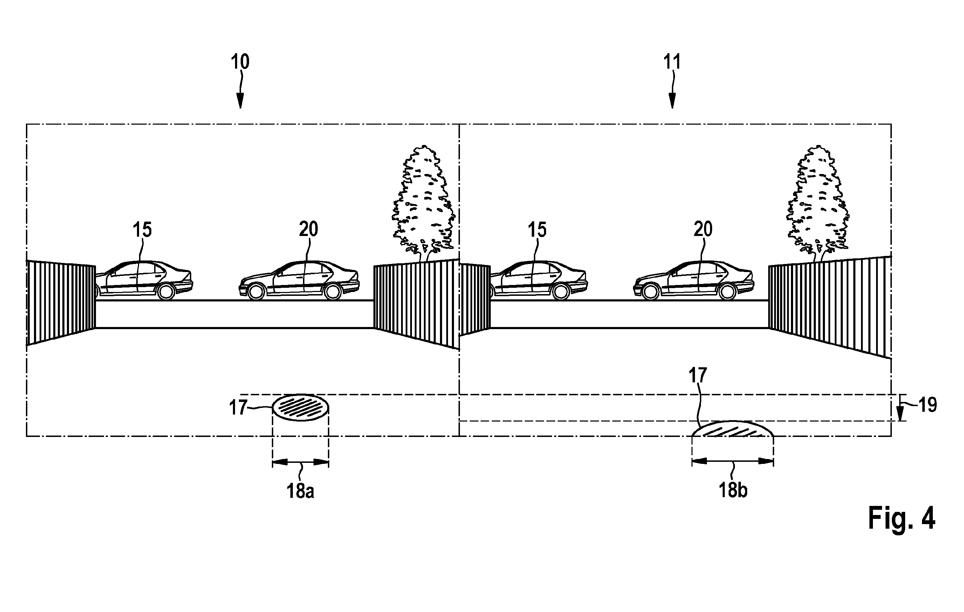

Figur 4 zeigt dazu das beispielhaftes Referenzbild 10 (oben), und ein zugehöriges beispielhaftes Vergleichsbild 11 (unten), das nach einem Versatz des Fahrzeuges 1 gegenüber der Referenzposition 3 entlang seiner Längsachse erfasst wurde. Als ein beispielhaftes Merkmal ist ein Kanaldeckel 17 gewählt, der mit einer dritten Breite 18a in dem Referenzbild 10 und einer vierten Breite 18b in dem Vergleichsbild 11 abgebildet ist. Die Größe des Kanaldeckels 17, ist hier durch die dritte und vierte Breite 18a, 18b repräsentiert. Die dritte Breite 18a ist in diesem Beispiel größer als die vierte Breite 18b. Es liegt somit eine Größenänderung bezüglich des Kanaldeckels 17 vor. Der Kanaldeckel 17 ist in dem Vergleichsbild 11 gegenüber dem Referenzbild 10 um eine vierte Strecke 19 vertikal nach unten verschoben, womit eine Lageänderung in vertikaler Richtung vorliegt. Somit wird in dem in Figur 4 gezeigten Fall ein zweiter Versatz 21 ermittelt. Ein Verschieben der Merkmale nach unten deutet dabei in der gezeigten Ausführungsform einen zweiten Versatz 21 des Fahrzeuges 1 nach hinten, also in Richtung der Blickrichtung der Kamera 4 und somit des Fahrzeughecks, an.

Der Drehwinkel α wird in dieser Ausführungsform ermittelt, wenn eine Lageänderung der Merkmale in vertikaler Richtung vorliegt, die Größe der Merkmale gleich bleibt und Merkmale in einem Nahbereich der Kamera 4 eine gleichen Lageänderung erfahren wie Merkmale, die weiter von der Kamera 4 entfernt sind.

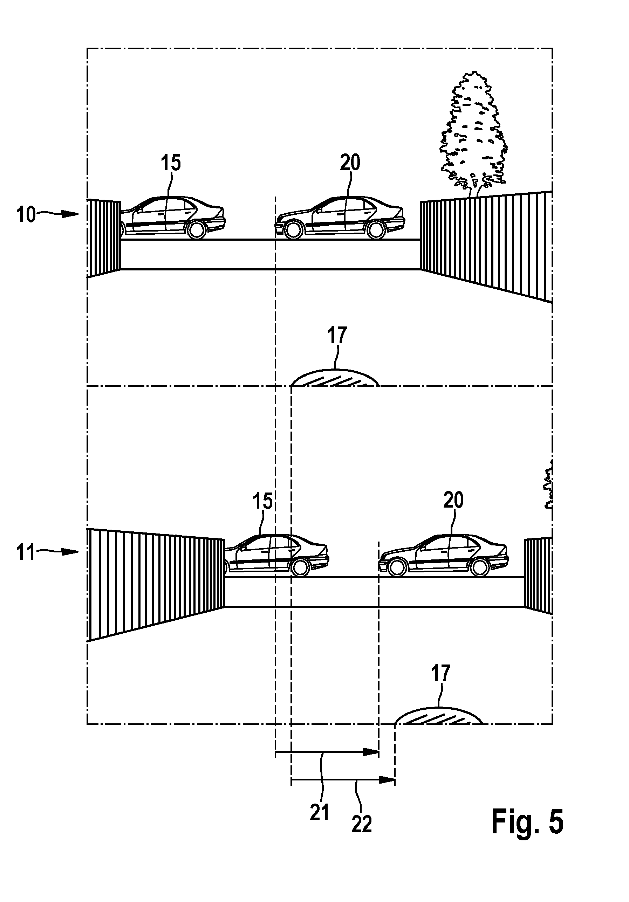

Figur 5 zeigt dazu das beispielhaftes Referenzbild 10 (oben), und ein zugehöriges beispielhaftes Vergleichsbild 11 (unten), das nach einer Drehung des Fahrzeuges 1 gegenüber der Referenzposition 3 um einen Winkel α erfasst wurde. Als ein beispielhaftes Merkmal ist ein zweites geparktes Fahrzeug 20 gewählt. Das zweite geparkte Fahrzeug 20 ist in dem Vergleichsbild 11 gegenüber dem Referenzbild 10 um eine dritte Strecke 21 horizontal nach rechts verschoben. Somit liegt eine Lageänderung des Merkmals in horizontaler Richtung vor. Als ein weiteres beispielhaftes Merkmal ist der Kanaldeckel 17 gewählt, welcher näher an der Kamera 4 liegt, als das zweite geparkte Fahrzeug 20. Der Kanaldeckel 17 ist in dem Vergleichsbild 11 gegenüber dem Referenzbild 10 um eine vierte Strecke 22 horizontal nach rechts verschoben. Die dritte Strecke 20 ist gleich der vierten Strecke 21. Somit wird in dem in Figur 3 gezeigten Falle eine Drehung des Fahrzeuges 1 um einen Winkel α ermittelt. Eine Verschiebung der Merkmale nach rechts deutet dabei in der gezeigten Ausführungsform eine Drehung des Fahrzeuges 1 gegen den Uhrzeigersinn und somit eine Drehung der Kamera 4 gegenüber ihrer ursprünglichen Blickrichtung nach links an.

Die Fahrzeugposition 2 des Fahrzeuges 1 gegenüber der Referenzposition 3 wird abschließend durch eine Kombination des ersten Versatzes 30, des zweiten Versatzes 31 und der Drehung um den Winkel α ermittelt. Die Größe einer Abweichung, also die Größe des ersten Versatzes 30, des zweiten Versatzes 31 und der Drehung um den Winkel α ist dabei ein Maß für den Abstand und den Grad der Drehung zwischen der Fahrzeugposition 2 und der Referenzposition 3. Die so ermittelte Fahrzeugposition 2 wird durch die Auswertungseinheit 5 bereitgestellt, um beispielsweise für eine automatische Steuerung des Fahrzeuges 1 genutzt zu werden, durch die das Fahrzeug 1 autonom zu der Zielposition bewegt wird, deren Lage gegenüber der Referenzposition 3 bekannt ist.

Nach dem Ausführen des vierten Verfahrensschrittes S4 verzweigt das Verfahren zurück auf den zweiten Verfahrensschritt S2. Auf diese Weise wird die Fahrzeugposition 2 des Fahrzeuges 1 gegenüber einer Referenzposition 3 erneut ermittelt und somit beständig aktualisiert. Diese Fahrzeugposition 2 wird einer Steuereinheit bereitgestellt, die eine autonome Längs- und Querführung des Fahrzeuges ausführt, um das Fahrzeug 1 in die Zielposition zu bewegen. Dies ist möglich, da sowohl die Lage der Referenzposition 3 gegenüber der Zielposition, als auch die aktuelle Fahrzeugposition 2 gegenüber der Zielposition bekannt ist. Es muss somit nur eine Abweichung der Fahrzeugposition gegenüber der Zielposition minimiert werden. Dabei können Hindernisse umfahren werden, indem einzelne Wegpunkte abgefahren werden, deren Position gegenüber der Referenzposition 3 ebenfalls, zum Beispiel durch ein einleitendes Abfahren dieser Wegpunkte, bekannt ist. Die Fahrzeugposition 2 des Fahrzeuges kann dabei über eine Odometrie präzisiert werden, sobald eine Fahrzeugposition 2 erstmalig ermittelt wurde.

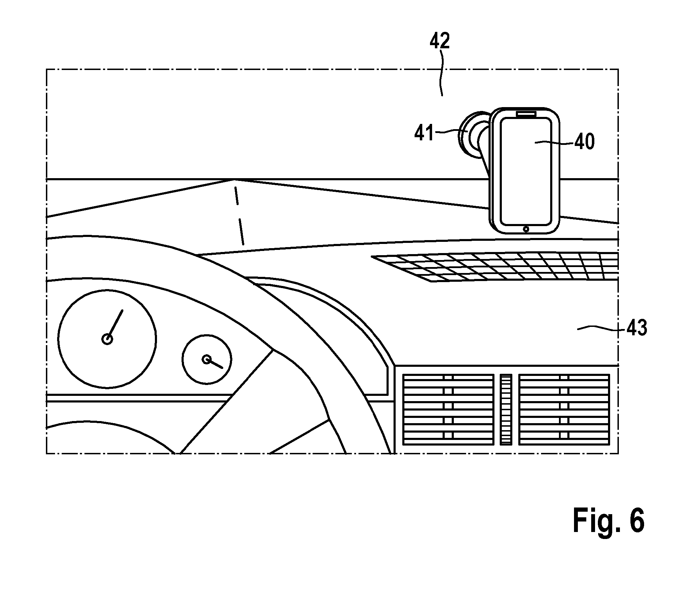

Eine zweite Ausführungsform der Erfindung entspricht im Wesentlichen der ersten Ausführungsform, jedoch wird die Kamera 4 von einem mobilen Gerät 40 umfasst. Das mobile Gerät 40 ist in dieser zweiten Ausführungsform ein Smartphone. Figur 6 zeigt ein an dem Fahrzeug 1 angeordnetes mobiles Gerät 40, welches die Kamera 4 der erfindungsgemäßen Vorrichtung in einer zweiten Ausführungsform der Erfindung umfasst. Über dem Armaturenbrett 43 des Fahrzeuges 1 ist eine Halterung 41 für das mobile Gerät 40 im Innenraum des Fahrzeuges 1 an der Windschutzscheibe 42 angebracht. Das mobile Gerät 40 kann von dem Anwender in die Halterung 41 eingesetzt werden und bei Bedarf auch aus dieser entfernt werden. Die Kamera 4 ist in dieser zweiten Ausführungsform also in Richtung der Fahrzeugfront gerichtet.

Es wird eine Datenverbindung zwischen dem mobilen Gerät 40 und der Auswertungseinheit 5 hergestellt, um das Referenzbild 10 und das Vergleichsbild 11 über diese zu übertragen. Die Datenverbindung kann dabei beispielsweise über ein Datenkabel, eine Bluetooth-Verbindung, eine WLAN-Verbindung oder ähnliches Erfolgen. Optional ist auch eine Übertragung des Referenzbildes 10 und des Vergleichsbildes 11 über einen Internetdienst möglich, mit dem sowohl das mobile Gerät als auch die Auswertungseinheit 5 Daten austauschen können.

Die Halterung 41 umfasst ein Gelenk, durch welches das mobile Gerät 40 in eine für den Anwender komfortable Position gebracht werden kann. Somit kann es sein, dass sich die vertikale und/oder horizontale Orientierung des mobilen Gerätes 40 gegenüber dem Fahrzeug 1 und somit auch die Orientierung der Kamera 4 gegenüber dem Fahrzeug 1 ändert. Um Fehler beim Ermitteln der Fahrzeugposition 2 des Fahrzeuges 1 gegenüber der Referenzposition 3 zu verringern, erfolgt daher eine Kalibrierung bezüglich der vertikalen und horizontalen Orientierung der Kamera 4.

Eine solche Kalibrierung erfolgt in dieser zweiten Ausführungsform jeweils vor dem Erfassen des Referenzbildes 10 und vor dem Erfassen des Vergleichsbildes 11. Dazu werden beispielsweise bei einer geradlinigen Bewegung des Fahrzeuges zwei Bilder in einem kurzen zeitlichen Abstand hintereinander aufgenommen. Aus einer Bewegung von Objekten in diesen beiden Bildern kann auf die vertikale und horizontale Orientierung des mobilen Gerätes 40 gegenüber dem Fahrzeug geschlossen werden. Das Vergleichsbild 11 wird entsprechend verzerrt, um eine Darstellung des Vergleichsbildes 11 zu erzielen, als ob dieses bei einer gleichen vertikalen und horizontalen Orientierung des mobilen Gerätes 40 gegenüber dem Fahrzeug 1 aufgenommen worden wären, bei der auch das Referenzbild 10 aufgenommen wurde.

Zusätzlich oder alternativ wird eine horizontale Orientierung des mobilen Gerätes 40 mittels eines Neigungssensors in dem mobilen Gerät während des Erfassens des Referenzbildes 10 und des Vergleichsbildes 11 erfasst und es erfolgt eine entsprechende Verzerrung des Vergleichsbildes 11, um eine Darstellung des Vergleichsbildes 11 zu erzielen, als ob dieses bei einer gleichen horizontalen Orientierung des mobilen Gerätes 40 gegenüber dem Fahrzeug 1 aufgenommen worden wäre, bei der auch das Referenzbild 10 aufgenommen wurde.

Zusätzlich oder alternativ wird eine vertikale Orientierung des mobilen Gerätes 40 mittels eines Richtungssensors in dem mobilen Gerät während des Erfassens des Referenzbildes 10 und des Vergleichsbildes 11 erfasst und es erfolgt eine entsprechende Verzerrung des Vergleichsbildes 11, um eine Darstellung des Vergleichsbildes 11 zu erzielen, als ob dieses bei einer gleichen vertikalen Orientierung des mobilen Gerätes 40 gegenüber dem Fahrzeug 1 aufgenommen worden wäre, bei der auch das Referenzbild 10 aufgenommen wurde..

Um nicht immer das gesamte Bild vergleichen zu müssen, ist es vorteilhaftrelevante Bereiche zu extrahieren und diese zu vergleichen. Hierbei ist es entscheidend, wie die relevanten Bereiche ausgewählt werden. Eine entsprechende dritte Ausführungsform der Erfindung entspricht der ersten oder zweiten Ausführungsform, wobei das Vergleichen des Referenzbildes 10 mit dem Vergleichsbild 11 basierend auf ausgewählten repräsentativen Merkmalen in dem Vergleichsbild 11 und dem Referenzbild 10 erfolgt. Solche repräsentativen Merkmale können beispielsweise Kanten und/oder Flächen sein.

Dabei werden repräsentative Merkmale werden in dieser dritten Ausführungsform ausgewählt, indem in dem ersten Verfahrensschritt S1 zusätzlich eine Filterung des Referenzbildes 10 mit einem Sobelfilter erfolgt. Durch einen Sobelfilter werden Kanten in dem Referenzbild extrahiert, welche dann das repräsentative Merkmal stellen. In dem zweiten Verfahrensschritt S2 erfolgt zusätzlich eine Filterung des Vergleichsbildes 11 mit dem Sobelfilter.

In dem dritten Verfahrensschritt S3 werden die gefilterten Bilder und somit die repräsentativen Merkmale verglichen, um eine Lageänderung und/oder eine Drehung zu ermitteln. Dazu wird beispielsweise eine Hough-Transformation verwendet, um die Kanten des Referenzbildes 10 in dem Vergleichsbild 11 zu finden. Wurde ein repräsentatives Merkmal aus dem Referenzbild 10 in dem Vergleichsbild 11 gefunden, so wird eine zugehörige Lageänderung und Größenänderung ermittelt.

Um das Ermitteln der Fahrzeugposition 2 anhand eines Mono-Bildes durchführen zu können ist es wichtig, Bildbereiche zu verwenden, die sehr eindeutig sind. Somit sind Bereiche mit Struktur, beispielsweise mit Kanten, besser geeignet als Bereiche ohne strukturelle Unterschiede, wie z.B. Flächen mit gleicher Farbe. In dieser dritten Ausführungsform werden daher zunächst Bereiche mit hohen strukturellen Unterschieden ermittelt, um diese Bereiche des Referenzbildes 10 in dem Vergleichsbild 11 wiederzuerkennen. Dabei ist es in dieser dritten Ausführungsform nicht notwendig, das komplette Referenzbild 10 und das komplette Vergleichsbild 11 zu speichern, sondern es ist ausreichend das gefilterte Referenzbild 10 und das gefilterte Vergleichsbild 11 zu speichern, wodurch die zu speichernden Datenmengen erheblich reduziert werden.

Neben der obigen schriftlichen Offenbarung wird explizit auf die Offenbarung der Figuren 1 bis 6 verwiesen.

## Patentansprüche

1. Verfahren zum Ermitteln einer Fahrzeugposition (2) eines Fahrzeuges (1) gegenüber einer Referenzposition (3), umfassend:
- Erfassen (S1) eines Referenzbildes (10) mittels einer an dem Fahrzeug (1) angeordneten Kamera (4), welche zumindest einen Teils eines Umfeldes des Fahrzeuges abbildet, wobei sich das Fahrzeug (1) in der Referenzposition (3) befindet,
- Erfassen (S2) eines Vergleichsbildes (11) mittels der an dem Fahrzeug (1) angeordneten Kamera (4),
- Vergleichen (S3) des Referenzbildes (10) mit dem Vergleichsbild (11), wobei eine Lageänderung und/oder eine Größenänderung von zumindest einem Merkmal in dem Vergleichsbild (11) gegenüber dem Referenzbild (10) ermittelt wird, und
- Ermitteln (S4) einer Fahrzeugposition (2) des Fahrzeuges (1) gegenüber der Referenzposition (3) basierend auf der Lageänderung und/oder der Größenänderung.

2. Verfahren gemäß Anspruch 1, **dadurch gekennzeichnet, dass** die Lageänderung eine Änderung der Lage eines Merkmales in horizontaler Richtung ist.

3. Verfahren gemäß einem der vorangehenden Ansprüche, **dadurch gekennzeichnet, dass** die Lageänderung eine Änderung der Lage eines Merkmales in vertikaler Richtung ist.

4. Verfahren gemäß einem der vorangehenden Ansprüche, **dadurch gekennzeichnet, dass** das Erfassen des Referenzbildes (10) und des Vergleichsbildes (11) durch ein mobiles Gerät (40), insbesondere ein Smartphone, erfolgt, welches derart in dem Fahrzeug (1) angeordnet ist, dass die Kamera (4) zumindest einen Teils eines Umfeldes des Fahrzeuges (1) abbildet.

5. Verfahren gemäß Anspruch 4, **dadurch gekennzeichnet, dass** das mobile Gerät (40) in einer dafür vorgesehenen Halterung (41) angeordnet ist.

6. Verfahren gemäß einem der vorangehenden Ansprüche, **dadurch gekennzeichnet, dass** eine Kalibrierung bezüglich der vertikalen und horizontalen Orientierung der Kamera (4) erfolgt.

7. Verfahren gemäß einem der vorangehenden Ansprüche, **dadurch gekennzeichnet, dass** das Vergleichen (S3) des Referenzbildes (10) mit dem Vergleichsbild (11) basierend auf ausgewählten repräsentativen Merkmalen in dem Vergleichsbild (11) und dem Referenzbild (10) erfolgt.

8. Verfahren gemäß Anspruch 7, **dadurch gekennzeichnet, dass** die repräsentativen Merkmale Kanten und/oder Flächen sind.

9. Vorrichtung zum Ermitteln einer Fahrzeugposition (2) eines Fahrzeuges (1) gegenüber einer Referenzposition (3), umfassend:
- eine an dem Fahrzeug (1) angeordneten Kamera (4), die dazu eingerichtet ist:
o ein Referenzbild (10) zu Erfassen, welche zumindest einen Teil eines Umfeldes des Fahrzeuges (1) abbildet, wenn das Fahrzeug (1) in der Referenzposition (3) befindlich ist, und
o ein Vergleichsbild (11) zu erfassen, und
- eine Auswertungseinheit (5), die dazu eingerichtet ist:
o das Referenzbild (10) mit dem Vergleichsbild (11) zu vergleichen, wobei eine Lageänderung und/oder eine Größenänderung von zumindest einem Merkmal in dem Vergleichsbild (11) gegenüber dem Referenzbild (10) ermittelt wird, und
o eine Fahrzeugposition (2) des Fahrzeuges (1) gegenüber der Referenzposition (3) basierend auf der Lageänderung und/oder der Größenänderung zu ermitteln.

10. Fahrzeug (1) mit einer Vorrichtung zum Ermitteln einer Fahrzeugposition (2) eines Fahrzeuges (1) gegenüber einer Referenzposition (3) gemäß Anspruch 9.
